# EUROPEAN PATENT SPECIFICATION

(11) **EP 2 686 156 B1**
(45) Date of publication and mention of the grant of the patent: **19.08.2015**
(21) Application number: 12709321.9
(22) Date of filing: 15.03.2012
(51) Int. Cl.: B32B 5/18, B32B 27/06, B32B 37/16, B29C 65/20, B29L 9/00, B29K 105/04, B32B 37/10, F03D 1/06

(54) **SANDWICH PANEL WITH A CORE OF STRUCTURAL FOAM AND MANUFACTURE THEREOF**
SANDWICHPLATTE MIT EINER INNENSCHICHT AUS STRUKTURSCHAUM, UND IHRE HERSTELLUNG
PANNEAU SANDWICH AVEC UNE AME EN MOUSSE STRUCTURELLE ET SON PROCEDE DE FABRICATION

(30) Priority: 15.03.2011 GB 201104339
(43) Date of publication of application: 22.01.2014
(73) Proprietor: Gurit (UK) Ltd., Newport Isle of Wight PO30 5WU (GB)
(72) Inventor: LAVOIE, Bernard, Joseph, Magog Québec J1X 5T7 (CA)
(74) Representative: Jenkins, Peter David
(86) International application number: PCT/EP2012/054593
(87) International publication number: WO 2012/123551

(56) References cited:
- EP-A1- 2 123 515
- DE-A1- 2 433 533
- GB-A- 1 315 472
- US-A- 3 902 943
- US-A1- 2003 098 520

## Description

The present invention relates to a method of, and an apparatus for, producing structural thermoplastic foam. In particular, the present invention relates to the manufacture of a laminated body of structural thermoplastic foam for use as a core material in a sandwich panel, for example in a wind turbine blade. The present invention also relates to structural foam and to a sandwich panel incorporating such structural foam.

It is known to use a thermoplastic foam core to manufacture a variety of different sandwich panel structures. The foam core is a sheet sandwiched between outer plies, for example plies of fibre reinforced composite material. Such foam cores may be used to manufacture wind turbine blades. The core is required to have high mechanical properties, such as shear strength, compressive strength, shear modulus and compressive modulus. The foam is also required to have the correct thickness and length dimensions to form the core, sometimes the core being formed by plural interlocking foam parts extending in series along the lengthwise direction of the blade.

There is a general need to reduce the cost of the foam core. It is known to produce a foam core, for example of polyethylene phthalate (PET) foam, by a direct extrusion process. That process has a low cost. Current PET direct extrusion foam cores can produce surface defects in the final component due to the manufacturing methods used to produce large sheets of foam, and have lower specific mechanical properties than other commercially available structural foams, such as Corecell available in commerce from Gurit (UK) Limited, which have been produced by other than an extrusion process, for example by expanding pre-polymerised sheets of polymer, or expansion of foam pellets in a closed mould. Wind blade manufacturers use the direct extrusion PET foam for application where lower mechanical properties can be tolerated and where lower cost is a primary consideration.

The general known process to manufacture thermoplastic foam consists in extruding a continuous foam board and cutting to length at the end of the extrusion line after the board has cooled down. The foam board dimensions may vary from one manufacturer to another. Generally the thickness of the board cannot be too high, or wide, because of limitations on the dimensions of the extrusion die, and because of the need to keep the board shape constant. The foam board could collapse under its own weight if the thickness is too high at the die exit. If the die was too wide it would become difficult to keep the polymer at the correct extrusion pressure and pressure drop within the die could not be maintained to produce high quality foam.

To achieve the final foam sheet dimensions, most manufacturers are required to weld a number of foam boards together to form a block, and then the block is sliced to form a sheet, with the cell direction of the extruded foam being in the desired orientation and determined by the cutting direction. Before welding, each face of the board to be welded is required to be surfaced to ensure a high level of planarity and thus a good adhesion to the adjacent face welded thereto. The surfacing process generates over 25% of material removed (scrap for regrind) from the board. This is wasteful.

US2008/105991A1 discloses a foam manufacturing process in which, similarly, a plurality of foam elements are welded together to form a laminated block after the plurality of foam elements have been produced. Individual foam block elements are joined together by a continuous network of intersecting weld lines, which are planar and extend in two mutually orthogonal directions.

The panel disclosed in US2008/105991A1 is alleged to have improved compressive strength by the presence of the by continuous network of intersecting weld lines. However, the welding produces a weld line of thermoplastic material which comprises solidified material which was molten during the welding process and accordingly does not have a foam structure. The high density material of the weld line and the low density foam material of the foam body are therefore heterogeneous. The welding increases the average density of the foam body. The weld line is relatively rigid compared to the foam core, and so the mechanical properties of the welded body are correspondingly not uniform. When the foam is incorporated as a core of a sandwich panel, the resultant sandwich panel may exhibit a macroscopically wavy outer surface, which is visible to the eye and can be felt manually. The resultant sandwich panel may therefore be rejected for failing quality assurance parameters. When the sandwich panel incorporating the welded foam core is incorporated into a wind turbine blade, the non-uniform sandwich panel may exhibit a problem with noise generation.

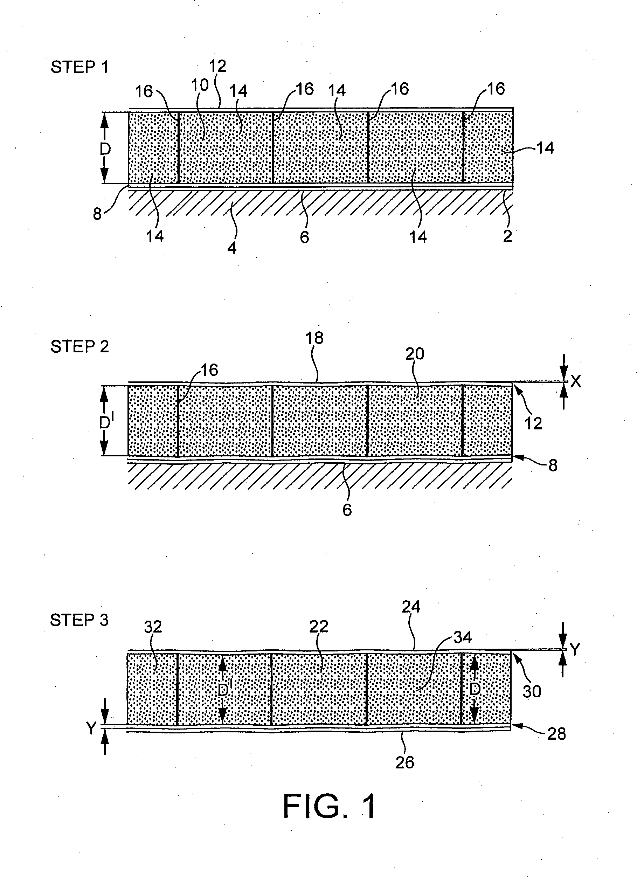

For example, Figure 1 is a schematic side view of a sequence of steps employed in the manufacture of a sandwich panel incorporating a welded structural foam core according to the above-described known welding process.

In a first step, indicated as Step 1 in Figure 1, of the known manufacturing method, a gel coat layer (2) is applied to the moulding surface (4) of a mold (6). A prepreg layer (8) is applied over the gel coat layer (2). The prepreg layer (8) comprises fibrous reinforcement, of desired orientation, for example a biaxially oriented fabric, in a matrix of curable resin material, for example a thermosetting resin such as epoxy resin. Then a foam core (10) is laid up onto the upper surface of the prepreg layer (8) and subsequently a second prepreg layer (12) is laid up onto the upper surface of the foam core (10).

The foam core (10) comprises a plurality of blocks (14) of thermoplastic foam interconnected by a plurality of parallel spaced weld lines (16). The weld lines (16) are planar, extend transversely through the core (10) and intersect the inner surfaces of the prepreg layers (8, 12).

A further set of weld lines, orthogonal to the weld lines (16) may also be present, with the two sets of orthogonal weld lines forming a continuous grid of weld lines. Yet further, a further layer of foam blocks may be provided so as to have plural stacked layers of foam, and again the layers may be mutually connected by weld lines. The weld lines may therefore comprises a linear array, a two dimensional grid, or a three dimensional network.

The lay-up process to form this assembly is carried out under atmospheric pressure.

Subsequently, a vacuum bag (not shown) is applied over the upper prepreg layer (12), in known manner, and then the entire laminate assembly between the mold (4) and the vacuum bag is subjected to negative pressure by connection to a source of vacuum. The vacuum causes the foam to shrink. The resultant structure after application of the vacuum is shown in Step 2 of Figure 1.

Typically, the foam shrinks in the transverse, i.e. thickness, direction by about 4%. For example, if the original foam thickness D is 45 mm, then the foam thickness D' as a result of the vacuum processing becomes 43.2 mm.

As shown in Step 2, since the weld lines (16) do not consist of foam material, but instead consist of rigid solidified molded thermoplastic material, the weld lines do not shrink. Instead, they retain the same transverse length. Consequently, an undulating configuration is formed in the surface (18) of the assembly (20) remote from the moulding surface (6). In the vicinity of the weld lines (16), the total thickness of the assembled layup is greater than the total thickness in the regions between adjacent weld lines (16). The difference in thickness corresponds to the shrinkage of the foam. The shrinkage is represented by distance X shown in Step 2. In the example, the amplitude between the higher surface portions at the weld lines (16) and the lower surface portions between the weld lines (16) is about 1.8 mm.

The assembly (20) is then cured under vacuum and at elevated temperature in the mould (4) in order to cure the resin in the prepregs (8, 12) and thereby form the sandwich panel (22) shown in Step 3.

After the curing cycle and removal of the sandwich panel (22) from the mold (4), the panel is again subjected to atmospheric pressure. The sandwich panel (22) deforms so as to have a symmetrical cross-sectional structure which retains an undulating, non-planar configuration on each of the two opposed major faces (24, 26) of the sandwich panel (22). The cured fibre reinforced material, comprising the outer layers (28, 30) of the sandwich panel (22) on opposite faces of the foam core (32), is rigid. The thickness of the foam in regions (34) between the weld lines (16) remains the shrunken thickness achieved under vacuum, D', for example 43.2 mm. The length of the weld lines (16) and the thickness of the foam in regions (36) immediately adjacent to the weld lines (16) remains the original foam thickness, D, for example 45 mm. On both opposite major faces (24, 26) of the sandwich panel (22) there is an undulating, non-planar configuration with a typical amplitude of about one half of the total shrinkage of the foam during the vacuum molding process. In the example given, the amplitude Y on each face (24, 26) of the sandwich panel (22) is typically about 0.9 mm.

As discussed above, such an uneven surface is undesirable.

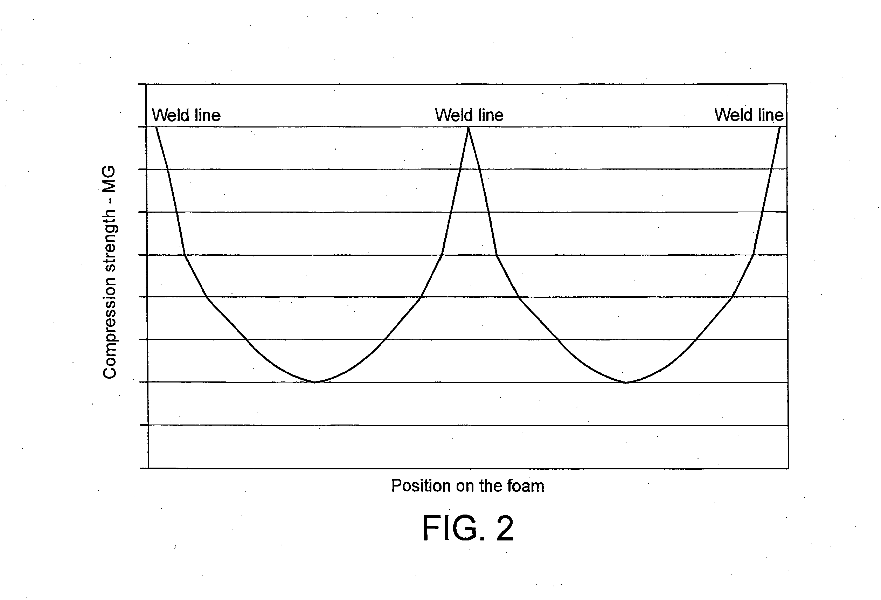

As well as providing a macroscopically uneven surface of the sandwich panel (22), the compression strength of the sandwich panel (22) is non-uniform. As illustrated in Figure 2, in the vicinity of the weld line the compression strength is high whereas in the vicinity of the foam between the weld lines the compression strength is low. Therefore the provision of the planar weld line provides a significantly non-uniform compression strength extending through the thickness of the sandwich panel, dependent upon the location of the weld line. The compression strength at the weld lines is significantly higher than the compression strength between the weld lines. The mechanical properties are accordingly not uniform.

As discussed above, such non-uniform mechanical properties are undesirable.

As an alternative to welding, adhesion of opposed foam faces may be achieved using an adhesive layer, for example applied as a liquid layer or as a tape coated with adhesive.

The use of welding or adhesion steps of the plural extruded foam boards increases the cost and complexity of the production of multi-layer structural foam laminates. It is therefore also known to produce laminates of foamed material without such additional welding or adhesion steps, but the manufacturing apparatus may be complicated and expensive, and may require co-extrusion, and/or the laminates so formed may not be multi-layer structural foam laminates which are suitable, for example, to produce of a laminated body of structural thermoplastic foam for use as a core material in a sandwich panel, for example in a wind turbine blade.

It is an aim of the present invention to overcome these problems of known manufacturing process for producing structural thermoplastic foam laminates.

The present invention also aims to provide a sandwich panel incorporating a structural foam, having improved mechanical properties.

The present invention provides a sandwich panel according to claim 9.

The present invention further provides a method of producing a sandwich panel according to claim 1.

Preferred features are defined in the dependent claims.

The preferred embodiments of the present invention can provide a manufacturing process and apparatus for manufacturing structural foam laminates which have enhanced homogeneity, improved mechanical properties, and reduced average density as compared to structural foam laminates produced using known welding processes. The preferred embodiments can also reduce the amount of waste foam material produced, for example by only requiring a final regrinding step of the outer surfaces of the laminated product. Additionally, the final foam sheet can have improved mechanical properties as compared to an adhered laminated sheet.

Embodiments of the present invention will now be described with reference to the accompanying drawings, in which:
Figure 1 is a schematic side view of a sequence of steps employed in the manufacture of a sandwich panel incorporating a welded structural foam core according to a known process;
Figure 2 is a schematic graph showing the relationship between compression strength of the foam in a plane of the sandwich panel manufactured according to the steps of Figure 1;
Figure 3 is a schematic side view of a sequence of steps employed in the manufacture of a sandwich panel incorporating a structural foam core in accordance with a first embodiment of the present invention;
Figures 4 (a) and (b) show successive steps to form a weld line with a welding plate in the sequence of Figure 3;
Figure 5 is a schematic graph showing the relationship between compression strength of the foam in a plane of the sandwich panel manufactured according to the steps of Figure 3;
Figure 6 is a schematic perspective view of a welding plate for use in the welding method in accordance with a second embodiment of the present invention;
Figure 7 is a schematic perspective view of a welding plate for use in the welding method in accordance with a third embodiment of the present invention;
Figure 8 is a schematic perspective view of a welding plate for use in the welding method in accordance with a fourth embodiment of the present invention; and
Figure 9 is a schematic perspective view of a welded foam body having a weld line produced using the welding plate of Figure 8.

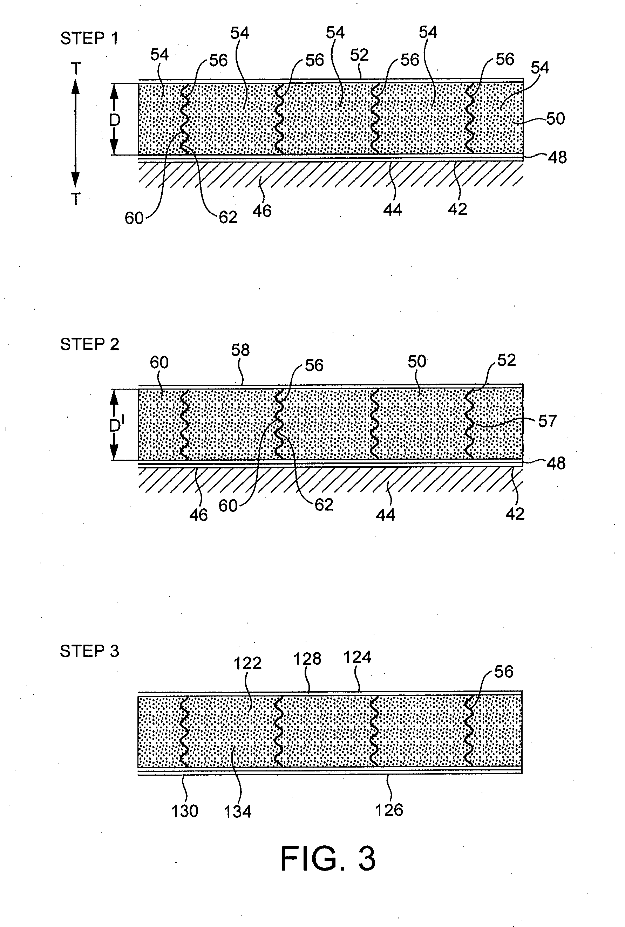

Figure 3 is a schematic side view of a sequence of steps employed in the manufacture of a sandwich panel incorporating a welded structural foam core according to a welding process of an embodiment of the present invention.

In a first step, indicated as Step 1 in Figure 3 a gel coat layer (42) is applied to the moulding surface (44) of a mold (46). A prepreg layer (48) is applied over the gel coat layer (42). The prepreg layer (48) comprises fibrous reinforcement, of desired orientation, for example a biaxially oriented fabric, in a matrix of curable resin material, for example a thermosetting resin such as epoxy resin. Then a foam core (50) is laid up onto the upper surface of the prepreg layer (48) and subsequently a second prepreg layer (52) is laid up onto the upper surface of the foam core (50). The lay-up process to form this assembly is carried out under atmospheric pressure.

The foam comprises a thermoplastic material, such as polyethylene terephthalate (PET), styrene acrylonitrile (SAN) polystyrene (PS) or a blend of PS and polyphenylene oxide (PPO), although other thermoplastic materials could be employed in accordance with the invention. The foam may be a closed cell foam, although an open cell foam may be made if desired. A variety of different cell sizes may be employed.

The foam core (50) comprises a plurality of blocks (54) of thermoplastic foam interconnected by a plurality of parallel spaced weld lines (56). The foam blocks (54) are substantially planar, and typically have a thickness of from 3 to 1200 mm, optionally from 5 to 60 mm.

texturing formed by the contoured weld line has a width which is less than the half of the thickness of each welded foam block (54).

The weld lines (56) extend transversely through the core (50) and intersect the inner surfaces of the prepreg layers (48, 52).

In accordance with the present invention the weld lines (56) are three-dimensional, contoured and non-planar. Typically, texturing on the surface of the foam blocks (54) formed by the contoured weld line has a width which is less than the half of the thickness of each welded foam block (54).

The weld lines (56) include convex and concave portions, and thereby the weld lines (56) include inclined portions (60, 62) which are inclined to the thickness direction T-T of the foam core (50). The inclined portions (60, 62) may be straight or curved, or a mixture of straight and curved parts. The inclined portions (60, 62) respectively extend at opposite angles to the thickness direction T-T so as to provide a weld interface which oscillates, on opposite sides, about a virtual central line. The contoured weld line (56) may have a zig-zag, sinusoidal, serpentine, undulating or similar configuration. The weld lines (56) may have contouring in the length direction (i.e. at right angles to the plane of the paper of Figure 3), extending in the plane of the foam blocks (68, 70), as well as in the thickness direction as illustrated in Figure 3. Accordingly, the contouring in the weld line (56) may be in two inclined, for example orthogonal, directions.

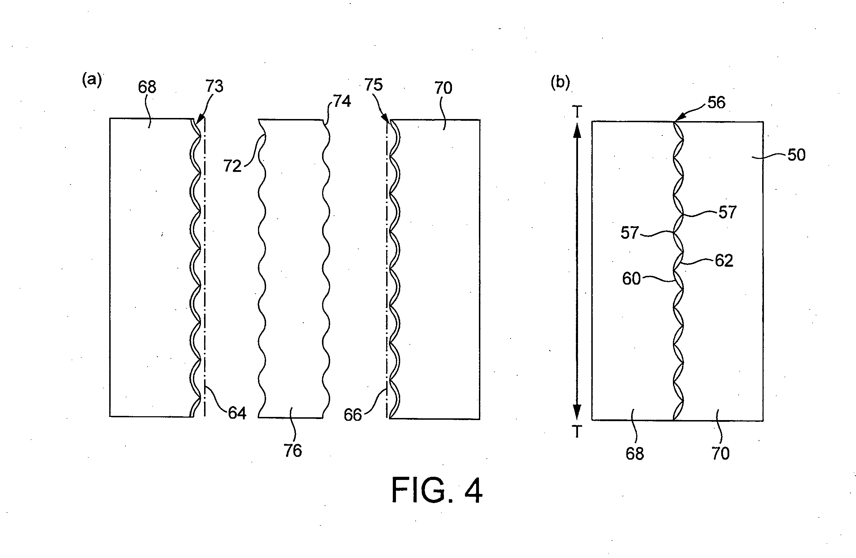

Figure 4 shows how the weld line (56) is formed. In Figure 4(a), opposite planar faces (64, 66), shown in phantom, of respective foam blocks (68, 70) are bought into contact with a respective one of two opposite welding surfaces (72, 74) of a heated welding plate (76). Each welding surface (72, 74) has a three-dimensionally textured surface which is shaped to mould a corresponding three-dimensional surface texture onto the respective face (64, 66) of the foam block (68, 70). The faces (64, 66) of the foam blocks (68, 70) are simultaneously or sequentially brought into contact with the respective welding surface (72, 74), which causes local melting of the thermoplastic material, and then the still molten textured surfaces (73, 75) of the foam blocks (68, 70) are brought together to weld the blocks (68, 70) together along the weld line (56) as shown in Figure 4(b). The textured surfaces (73, 75) are complementary to ensure a reliable full surface continuous weld line (56).

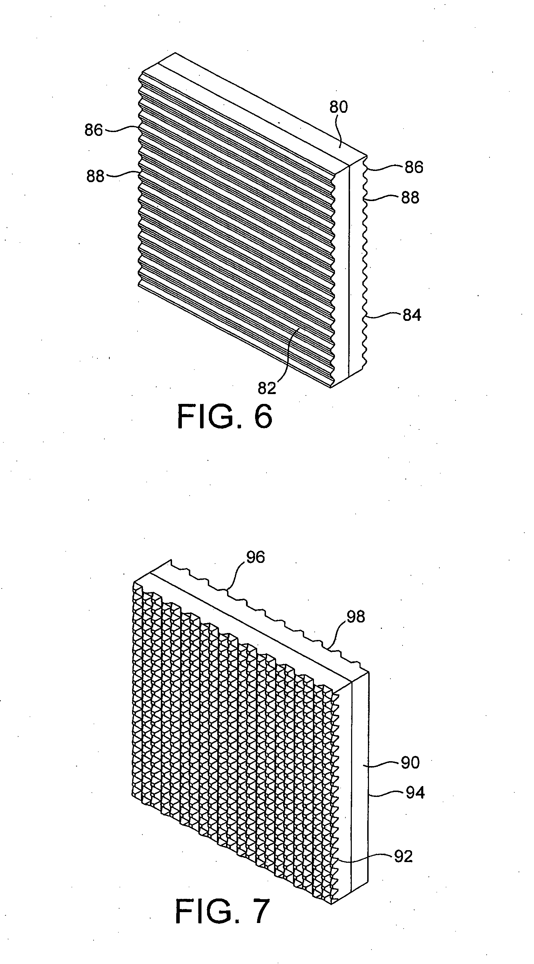

Figures 6 to 7 show alternative welding plates for use in the welding method of the present invention. The welding plate is typically composed of a heat-conductive metal such as aluminium.

In Figure 6, the welding plate (80) has opposite welding surfaces (82, 84), each of which has a one-dimensionally undulating configuration. Each welding surface (82, 84) comprises a continuously curved configuration, with the axis of curvature being parallel to the plane of the welding plate (80), defining an array of alternating linear peaks (86) and troughs (88). For example, the surface has a sinusoidal configuration. Typically, the pitch between the adjacent peaks (86) is from 2 to 10 mm, most typically from 4 to 6 mm. Typically, the amplitude between the adjacent peaks (86) and troughs (88) is from 1 to 10 mm, most typically from 2 to 6 mm. In one example, the peak-to-peak pitch is 5 mm, the peak-to-trough amplitude is 4 mm and the peak and trough radius of curvature is 2 mm.

In Figure 7, the welding plate (90) has opposite welding surfaces (92, 94), each of which has a two-dimensionally undulating configuration. Each welding surface (92, 94) comprises a configuration, as a regular two-dimensional array, with peaks (96) and flat troughs (98), the peaks (96) and troughs (98) extending in two orthogonal directions. The peaks (96) may be curved, for example conical or frustoconical, or faceted with flat faces, for example pyramidal. This defines a two-dimensional array of alternating peaks (96) and troughs (98). Typically, the pitch between the adjacent peaks (96) is from 2 to 10 mm, most typically from 4 to 6 mm. Typically, the amplitude between the adjacent peaks (96) and troughs (98) is from 1 to 10 mm, most typically from 2 to 6 mm.

Referring back to Figures 3 and 4, the welding process described above provides that each weld line (56) includes inclined portions (60, 62) which are inclined to the thickness direction T-T of the foam core (50).

Subsequently, a vacuum bag (not shown) is applied over the upper prepreg layer (52), in known manner, and then the entire laminate assembly between the mold (44) and the vacuum bag is subjected to negative pressure by connection to a source of vacuum. The vacuum causes the foam to shrink. The resultant structure after application of the vacuum is shown in Step 2 of Figure 3.

The vacuum causes the foam to shrink in the transverse, i.e. thickness, direction, typically by about 4%. For example, if the original foam thickness D is 45 mm, then the foam thickness D' as a result of the vacuum processing becomes 43.2 mm.

As shown in Step 2, since the weld lines (56) include inclined portions (60, 62) which are inclined to the thickness direction T-T of the foam core (50), even though the weld lines (56) do not consist of foam material, but instead consist of solidified molded thermoplastic material, the weld lines (56) can flex, the junctions (57) between the inclined portions (60, 62) acting as living hinges. Therefore the weld lines (56) tend to shrink in length under vacuum together with the adjacent foam. Accordingly the use of the contoured weld lines (56) permits the entire foam core (50) to shrink substantially uniformly across its entire surface area.

Consequently, a substantially planar surface configuration is formed in the surface (58) of the assembly (60) remote from the moulding surface (46).

The assembly (60) is then cured under vacuum and at elevated temperature in the mould (44) in order to cure the resin in the prepregs (48, 52) and thereby form the sandwich panel (122) shown in Step 3.

After the curing cycle and removal of the sandwich panel (122) from the mold (44), the panel is again subjected to atmospheric pressure. The sandwich panel (122) deforms so as to have a symmetrical cross-sectional structure which retains a substantially planar configuration on each of the two opposed major faces (124, 126) of the sandwich panel (122). The cured fibre reinforced material, comprising the outer layers (128, 130) of the sandwich panel (122) on opposite faces of the foam core (132), is rigid. The thickness of the foam, in regions (134) between the weld lines (56) and in regions (36) immediately adjacent to the weld lines (16) is the reduced shrunk foam thickness, D', caused by the vacuum shrinkage. Both opposite major faces (124, 126) of the sandwich panel (122) are substantially planar.

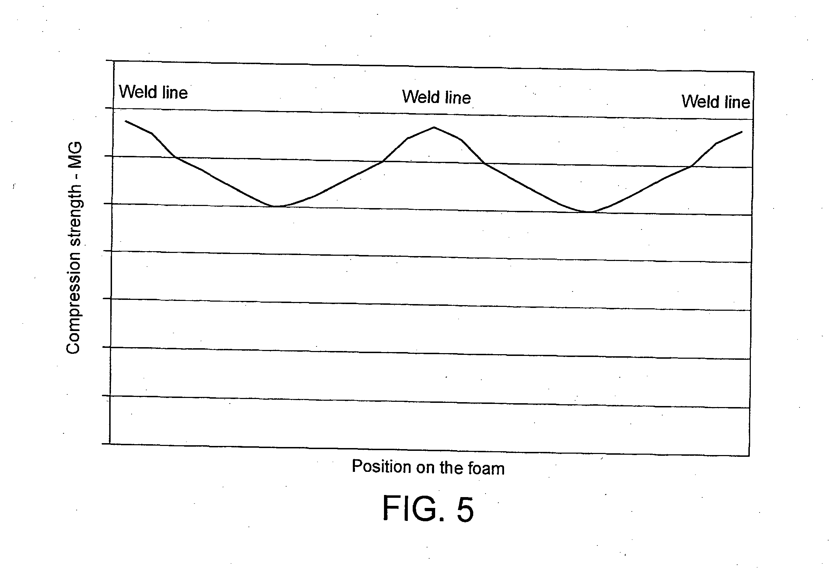

As well as providing a macroscopically even surface of the sandwich panel (122), the compression strength of the sandwich panel (122) is made more uniform as compared to the use of planar weld lines as discussed above. As illustrated in Figure 5, in the vicinity of the contoured weld line the compression strength is only slightly higher than in the vicinity of the foam between the contoured weld lines. Accordingly, the use of contoured weld lines increases the uniformity of the compression strength. Therefore the provision of the contoured weld line provides a significantly more uniform compression strength extending through the thickness of the sandwich panel, substantially independent upon the location of the weld line. The compression strength at the weld lines is substantially the same as than the compression strength between the weld lines. The mechanical properties are accordingly substantially uniform.

The increased planarity of the foam surfaces would increase the adhesion strength between the foam and the prepreg layers during manufacture, resulting in enhanced mechanical strength of the sandwich panel. Improvement of the mechanical properties allows a reduction in the average foam density to achieve the same minimum threshold of mechanical performance.

In the embodiments where the contouring of the weld lines is present in two dimensions, as when using the welding plate 90 of Figure 7, correspondingly the mechanical properties of the foam and of the sandwich panel are made more uniform in both dimensions.

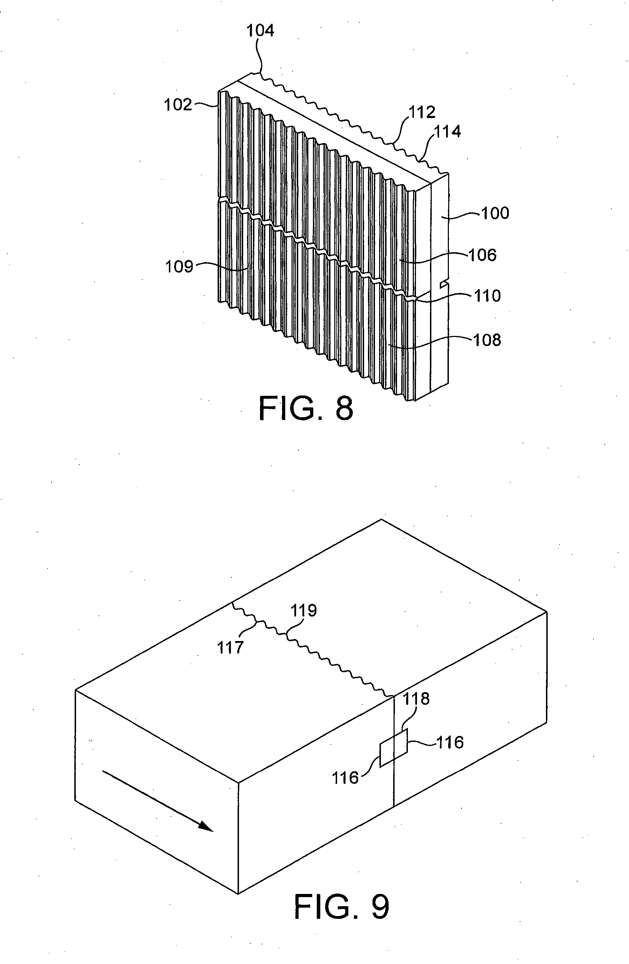

Figure 8 is a schematic perspective view of a welding plate for use in the welding method in accordance with a fourth embodiment of the present invention and Figure 9 is a schematic perspective view of a welded foam body having a weld line produced using the welding plate of Figure 8. The weld line contouring in those Figures is at right angles to that shown in the remaining Figures, but the contouring orientation in a resultant sandwich panel would be as illustrated, for example, in Figure 3.

In Figure 8, a further embodiment of a welding plate (100) has opposite welding surfaces (102, 104), each of which has a one-dimensionally undulating configuration. Each welding surface (102, 104) comprises a pair of continuously contoured areas (106, 108) separated by an elongate recessed channel (110) which forms a discontinuous welding surface (109) on each side of the welding plate (100). As for Figure 6, the axis of curvature is parallel to the plane of the welding plate (100), defining an array of alternating linear peaks (112) and troughs (114) in the respective area (106, 108). Typically, the pitch between the adjacent peaks (112) is from 2 to 10 mm, most typically from 4 to 6 mm. Typically, the amplitude between the adjacent peaks (112) and troughs (114) is from 1 to 10 mm, most typically from 2 to 6 mm. Typically, the width of the recessed channel (110) is from 1 to 5mm, most typically from 1 to 2mm.

Referring to Figure 9, during the welding step, the channels (110) may be aligned with the extrusion direction of the foam, so that the linear peaks (112) and troughs (114) are orthogonal to the extrusion direction of the foam. During the welding step, the foam material received within the recessed channels (110) is not melted but remains as a strip (116) of foam material (the strip dimensions are exaggerated in Figure 9 for clarity of illustration). Consequently, when the two molten foam surfaces are brought together to be welded together, the strips (116) are urged together into mutual contact, and the foam in the strips (116) is compressed to form a contact line (118) separating adjacent welded surfaces (117, 119). The foam at the contact line (118) is under compression because the melting and welding of the adjacent foam has reduced the surface of the foam, leaving the strips (116) higher than the adjacent molten surfaces. When the raised strips (116) are urged together so that the molten surfaces are welded together, the foam in the strips (116) is compressed.

The provision of such foam compression contact lines (118) provides a discontinuity in the weld line structure. This provides in turn that the foam is uniformly deformable in two or three dimensions, depending upon whether the weld lines are in two or three dimensions. There is no continuous network of weld lines, but a series of mutually separated weld lines, which may be in two or three dimensions.

The panel disclosed in US2008/105991A1 is alleged to have improved compressive strength by the presence of continuous network of intersecting weld lines, the weld lines acting as rigid reinforcing struts. In the present invention, in contrast the weld lines are specifically structured by contouring so as to be deformable. This enhances the homogeneity of the foam deformation, and improves the mechanical properties of the welded foam and a sandwich panel incorporating the welded foam. The deformability is enhanced by providing separated weld structures by provision of the unwelded contact lines (118) between adjacent weld structures.

By providing a more uniformly deformable foam, the testing of the foam would led to a more uniform mechanical testing result, with lower standard deviation between different samples and a higher minimum characteristic value of the mechanical property. The technical result is that the foam would be classified as having higher mechanical properties than a less uniform foam.

In other embodiments of the present invention, a further set of weld lines, orthogonal to the weld lines (56) may also be present, with the two sets of orthogonal weld lines forming a continuous grid of weld lines. Yet further, a further layer of foam blocks may be provided so as to have plural stacked layers of foam, and again the layers may be mutually connected by weld lines. The weld lines may therefore comprise a linear array, a two dimensional grid, or a three dimensional network.

In a further alternative embodiment, rather than using a heated welding plate to form the molten contoured surfaces to be welded together, the three dimensional contoured faces of the foam blocks may be pre-cut, then the faces may be heated, for example by an infra-red heater, so as to provide a pair of molten surfaces, and then the two molten surfaces are brought into contact to weld them together. The geometrical shape and dimensions of the weld faces may be as described for the previous embodiments.

The welding plates of the present invention can readily be integrated into a conventional foam block welding line, which may be located downstream of a foam extrusion line.

The present invention may be used to produce laminated structural foam products for use in any application requiring a structural foam core, for example in the marine or civil engineering market, or for use in the manufacture of wind turbine blades.

The present invention provides a number of technical and commercial benefits as compared to known products and processes. The product can exhibit increased mechanical properties. The production process can readily be incorporated into an existing production line. There can be a reduced scrap rate of the foam, since reduced regrind material is produced, because the foam faces to be welded do not need to be precisely machined.

## Claims

1. A method of producing a sandwich panel comprising a body of structural thermoplastic foam, the method comprising the steps of:
a. providing a plurality of foam elements (54);
b. contacting a face of each foam element with a heated plate (76) having a contoured surface having convex and concave portions, the heated plate (76) melting at least a portion of the face to provide a correspondingly contoured molten layer having concave and convex portions;
c. welding together the faces of adjacent foam elements (54) to form the body by bringing opposed complementary contoured molten layers into mutual contact, the welding forming a contoured weld line (56) having convex and concave portions; and
d. sandwiching the body between opposed layers of fibre reinforced resin composite material (48), the body forming a core (50) and the contoured weld line (56) extending in a thickness direction of the core (50).

2. A method according to claim 1 wherein the foam elements are substantially planar and have a thickness of from 3 to 1200 mm, optionally from 5 to 60 mm, and wherein texturing formed by the contoured weld line (56) has a width which is less than the half of the thickness of each welded foam element (54).

3. A method according to claim 1 or claim 2 wherein (a) the contoured surface (73,75) and the contoured weld line (56) have contouring in one direction, or (b) the contoured surface (73,75) and the contoured weld line (56) have contouring in two inclined directions, optionally wherein the contoured surface (73,75) and the contoured weld line (56) define a two-dimensional array of peaks and troughs extending in two inclined directions.

4. A method according to any foregoing claim wherein the weld line (50) oscillates, on opposite sides, about a virtual central line, optionally wherein the oscillating weld line (56) has a pitch between adjacent peaks of from 2 to 10 mm and an amplitude between adjacent peaks of from 1 to 10 mm.

5. A method according to any foregoing claim wherein the weld line (56) is generally aligned with a thickness direction of the body and includes inclined portions (60,62) which are inclined to the thickness direction, optionally wherein the inclined portions (60,62) are straight, curved, or a mixture of straight and curved parts.

6. A method according to any foregoing claim wherein in step (b) the heated plate (72) has a non-welding portion (110) located between a pair of welding portions (102,104), and in step (c) the welding forms a pair of contoured weld line portions separated by a non-welded foam portion (116), optionally wherein (i) the non-welding portion (110) comprises a recessed channel in the heated plate (100), and the non-welded foam portion (116) comprises a pair of raised foam parts compressed together, and/or (ii) the non-welding portion (110) is elongate and centrally located in the surface of the welding plate (100).

7. A method according to any foregoing claim wherein in step (b) plural faces of each foam element (54) are melted and in step (c) (i) the foam elements are welded to provide a further second contoured weld line (56), orthogonal to the contoured weld line (56), and/or (ii) the foam elements (54) are welded to provide two sets of orthogonal weld lines (56) forming a continuous grid of weld lines, and/or (iii) two layers of foam elements (54) are welded to provide two stacked layers of foam, the layers being mutually connected by contoured weld lines (56), so that in the body the weld lines (56) optionally comprise a linear array, a two dimensional grid, or a three dimensional network.

8. A method according to any foregoing claim, the method comprising assembling the core (50) between opposed layers of prepreg material (40), subjecting the assembly to a vacuum and curing the assembly at elevated temperature to cure resin material in the prepreg material, wherein the contoured weld line (56) compresses together with the foam material under the effect of the vacuum.

9. A sandwich panel comprising a core (50) comprising a body of structural thermoplastic foam, the body comprising a plurality of substantially planar foam elements (54) welded together, each foam element (54) having a textured face welded to a textured face of an adjacent substantially planar foam element (54) by a contoured weld line (56) having convex and concave portions, and the core (50) being sandwiched between opposed layers of fibre reinforced resin composite material, and at least one contoured weld line (56) extending in a thickness direction of the core (50).

10. A sandwich panel according to claim 9 wherein (a) the contoured weld line (56) has contouring in one direction, or (b) the contoured weld line (56) has contouring in two inclined directions, optionally wherein the contoured weld line (56) defines a two-dimensional array of peaks and troughs extending in two inclined directions.

11. A sandwich panel according to claim 9 or claim 10 wherein the weld line (56) oscillates, on opposite sides, about a virtual central line, optionally wherein the oscillating weld line (56) has a pitch between adjacent peaks of from 2 to 10 mm and an amplitude between adjacent peaks of from 1 to 10 mm.

12. A sandwich panel according to any one of claims 9 to 11 wherein the weld line (56) is generally aligned with a thickness direction of the body and includes inclined portions (60,62) which are inclined to the thickness direction, optionally wherein the inclined portions (60,62) are straight, curved, or a mixture of straight and curved parts.

13. A sandwich panel according to any one of claims 9 to 12 wherein the weld line (56) comprises a pair of contoured weld line portions separated by a non-welded foam portion (110), optionally wherein (i) the non-welded foam portion (116) comprises a pair of raised foam parts compressed together, and/or (ii) the non-welded foam portion (116) is elongate and centrally located in the contoured weld line.

14. A sandwich panel according to any one of claims 9 to 13 wherein (i) the foam elements (54) are welded to provide a further second contoured weld line (56), orthogonal to the contoured weld line, and/or (ii) the foam elements (54) are welded to provide two sets of orthogonal weld lines (56) forming a continuous grid of weld lines, and/or (iii) two layers of foam elements (54) are welded to provide two stacked layers of foam, the layers being mutually connected by contoured weld lines (56).

15. A sandwich panel according to any one of claims 9 to 14 wherein the weld lines (56) comprise a linear array, a two dimensional grid, or a three dimensional network.

## Patentansprüche

1. Verfahren zum Herstellen einer Sandwichplatte, die einen Körper aus thermoplastischem Strukturschaumstoff umfasst, wobei das Verfahren folgende Schritte umfasst:
a. Bereitstellen einer Vielzahl von Schaumstoffelementen (54);
b. Berühren einer Seitenfläche jedes Schaumstoffelements mit einer erwärmten Platte (76) mit einer konturierten Oberfläche mit konvexen und konkaven Abschnitten, wobei die erwärmte Platte (76) mindestens einen Abschnitt der Seitenfläche schmilzt, um eine entsprechend konturierte geschmolzene Schicht mit konkaven und konvexen Abschnitten bereitzustellen;
c. Zusammenschweißen der Seitenflächen benachbarter Schaumstoffelemente (54), um den Körper zu bilden, indem gegenüberliegende komplementäre konturierte geschmolzene Schichten in gegenseitigen Kontakt gebracht werden, wobei das Schweißen eine konturierte Schweißnaht (56) mit konvexen und konkaven Abschnitten bildet, und
d. sandwichartiges Anordnen des Körpers zwischen gegenüberliegenden Schichten aus faserverstärktem Harzverbundmaterial (48), wobei der Körper einen Kern (50) bildet und sich die konturierte Schweißnaht (56) in einer Dickenrichtung des Kerns (50) erstreckt.

2. Verfahren nach Anspruch1, wobei die Schaumstoffelemente im Wesentlichen ebenflächig sind und eine Dicke von von 3 bis 1200 mm, optional von 5 bis 60 mm aufweisen und wobei durch die konturierte Schweißnaht (56) gebildete Texturierung eine Breite aufweist, die weniger als die Hälfte der Dicke jedes geschweißten Schaumstoffelements (54) beträgt.

3. Verfahren nach Anspruch 1 oder Anspruch 2, wobei (a) die konturierte Oberfläche (73,75) und die konturierte Schweißnaht (56) Konturierung in einer Richtung aufweisen, oder (b) die konturierte Oberfläche (73,75) und die konturierte Schweißnaht (56) Konturierung in zwei schrägen Richtungen aufweisen, wobei optional die konturierte Oberfläche (73,75) und die konturierte Schweißnaht (56) ein zweidimensionales Muster von Spitzen und Tälern definieren, das sich in zwei schrägen Richtungen erstreckt.

4. Verfahren nach einem der vorangehenden Ansprüche, wobei die Schweißnaht (50) auf gegenüberliegenden Seiten um eine virtuelle Mittelnaht pendelt, wobei optional die pendelnde Schweißnaht (56) einen Abstand zwischen benachbarten Spitzen von von 2 bis 10 mm und eine Amplitude zwischen benachbarten Spitzen von von 1 bis 10 mm aufweist.

5. Verfahren nach einem der vorangehenden Ansprüche, wobei die Schweißnaht (56) allgemein auf eine Dickenrichtung des Körpers ausgerichtet ist und schräge Abschnitte (60,62) umfasst, die gegenüber der Dickenrichtung schräg sind, wobei optional die schrägen Abschnitten (60,62) gerade, gekrümmt oder eine Mischung aus geraden und gekrümmten Teilen sind.

6. Verfahren nach einem der vorangehenden Ansprüche, wobei in Schritt (b) die erwärmte Platte (72) einen nicht schweißenden Abschnitt (110) aufweist, der zwischen einem Paar Schweißabschnitte (102,104) liegt und in Schritt (c) das Schweißen ein Paar konturierter Schweißnahtabschnitte bildet, die von einem nicht geschweißten Schaumstoffabschnitt (116) getrennt werden, wobei optional (i) der nicht schweißende Abschnitt (110) eine ausgesparte Rille in der erwärmten Platte (100), umfasst und der nicht geschweißte Schaumstoffabschnitt (116) ein Paar erhöhte, zusammengedrückte Schaumstoffteile umfasst und/oder (ii) der nicht schweißende Abschnitt (110) langgestreckt ist und mittig in der Oberfläche der Schweißplatte (100) liegt.

7. Verfahren nach einem der vorangehenden Ansprüche, wobei in Schritt (b) mehrere Seitenflächen jedes Schaumstoffelements (54) geschmolzen werden und in Schritt (c) (i) die Schaumstoffelemente geschweißt werden, um eine weitere zweite konturierte Schweißnaht (56) senkrecht zu der konturierten Schweißnaht (56) zu bilden, und/oder (ii) die Schaumstoffelemente (54) geschweißt werden, um zwei Sätze von orthogonalen Schweißnähten (56) bereitzustellen, die ein kontinuierliches Gitter von Schweißnähten bilden, und/oder (iii) zwei Schichten aus Schaumstoffelementen (54) geschweißt werden, um zwei gestapelte Schichten aus Schaumstoff bereitzustellen, wobei die Schichten durch konturierte Schweißnähte (56) miteinander verbunden werden, so dass in dem Körper die Schweißnähte (56) optional eine lineares Muster, ein zweidimensionales Gitter oder ein dreidimensionales Netz umfassen.

8. Verfahren nach einem der vorangehenden Ansprüche, wobei das Verfahren das Zusammensetzen des Kerns (50) zwischen gegenüberliegenden Schichten aus Prepreg-Material (40), Beaufschlagen der Anordnung mit einem Unterdruck und Aushärten der Anordnung bei erhöhter Temperatur, um Harzmaterial in dem Prepreg-Material auszuhärten, umfasst, wobei die konturierte Schweißnaht (56) unter der Wirkung des Unterdrucks mit dem Schaumstoffmaterial zusammengedrückt wird.

9. Sandwichplatte, umfassend einen Kern (50), der einen Körper aus thermoplastischem Strukturschaumstoff umfasst, wobei der Körper eine Vielzahl von im Wesentlichen ebenflächigen zusammengeschweißten Schaumstoffelementen (54) umfasst, wobei jedes Schaumstoffelement (54) eine texturierte Seitenfläche aufweist, die durch eine konturierte Schweißnaht (56) mit konvexen und konkaven Abschnitten an eine texturierte Seitenfläche eines benachbarten im Wesentlichen ebenflächigen Schaumstoffelements (54) geschweißt ist und der Kern (50) sandwichartig zwischen gegenüberliegenden Schichten aus faserverstärktem Harzverbundmaterial angeordnet ist und sich mindestens eine konturierte Schweißnaht (56) in einer Dickenrichtung des Kerns (50) erstreckt.

10. Sandwichplatte nach Anspruch 9, wobei (a) die konturierte Schweißnaht (56) Konturierung in einer Richtung aufweist, oder (b) die konturierte Schweißnaht (56) Konturierung in zwei schrägen Richtungen aufweist, wobei optional die konturierte Schweißnaht (56) ein zweidimensionales Muster von Spitzen und Tälern definiert, das sich in zwei schrägen Richtungen erstreckt.

11. Sandwichplatte nach Anspruch 9 oder Anspruch 10, wobei die Schweißnaht (56) auf gegenüberliegenden Seiten um eine virtuelle Mittelnaht pendelt, wobei optional die pendelnde Schweißnaht (56) einen Abstand zwischen benachbarten Spitzen von von 2 bis 10 mm und eine Amplitude zwischen benachbarten Spitzen von von 1 bis 10 mm aufweist.

12. Sandwichplatte nach einem der Ansprüche 9 bis 11, wobei die Schweißnaht (56) allgemein auf eine Dickenrichtung des Körpers ausgerichtet ist und schräge Abschnitte (60,62) umfasst, die gegenüber der Dickenrichtung schräg sind, wobei optional die schrägen Abschnitten (60,62) gerade, gekrümmt oder eine Mischung aus geraden und gekrümmten Teilen sind.

13. Sandwichplatte nach einem der Ansprüche 9 bis 12, wobei die Schweißnaht (56) ein Paar konturierte Schweißnahtabschnitte umfasst, die von einem nicht geschweißten Schaumstoffabschnitt (110) getrennt werden, wobei optional (i) der nicht geschweißte Schaumstoffabschnitt (116) ein Paar erhöhte, zusammengedrückte Schaumstoffteile umfasst, und/oder (ii) der nicht geschweißte Schaumstoffabschnitt (116) langgestreckt ist und mittig in der konturierten Schweißnaht liegt.

14. Sandwichplatte nach einem der Ansprüche 9 bis 13, wobei (i) die Schaumstoffelemente (54) geschweißt sind, um eine weiter zweite konturierte Schweißnaht (56) orthogonal zu der konturierten Schweißnaht bereitzustellen, und/oder (ii) die Schaumstoffelemente (54) geschweißt sind, um zwei Sätze von orthogonalen Schweißnähten (56) bereitzustellen, die ein kontinuierliches Gitter aus Schweißnähten bilden, und/oder (iii) zwei Schichten aus Schaumstoffelementen (54) geschweißt sind, um zwei gestapelte Schichten aus Schaumstoff bereitzustellen, wobei die Schichten durch konturierte Schweißnähte (56) miteinander verbunden sind.

15. Sandwichplatte nach einem der Ansprüche 9 bis 14, wobei die Schweißnähte (56) ein lineares Muster, ein zweidimensionales Gitter oder ein dreidimensionales Netz umfassen.

## Revendications

1. Procédé de production d'un panneau sandwich qui comporte un corps en mousse thermoplastique structurelle, le procédé comprenant les étapes consistant à :
a. réaliser une pluralité d'éléments en mousse (54) ;
b. mettre en contact une face de chaque élément en mousse avec une plaque chauffée (76) ayant une surface profilée avec des parties convexe et concave, la plaque chauffée (76) faisant fondre au moins une partie de la face pour réaliser une couche fondue à profilage correspondant ayant des parties concave et convexe ;
c. souder ensemble les faces des éléments en mousse adjacents (54) pour former le corps en mettant les couches fondues profilées complémentaires opposées en contact mutuel, le soudage formant une ligne de soudure profilée (56) ayant des parties convexe et concave ; et
d. mettre en sandwich le corps entre des couches opposées de matériau composite en résine renforcée par des fibres (48), le corps formant une âme (50) et la ligne de soudure profilée (56) se prolongeant dans un sens d'épaisseur de l'âme (50).

2. Procédé selon la revendication 1, dans lequel les éléments en mousse sont sensiblement plans et ont une épaisseur comprise entre 3 et 1200 mm, facultativement entre 5 et 60 mm, et dans lequel la texturation formée par la ligne de soudure profilée (56) a une largeur qui est inférieure à moins de la moitié de l'épaisseur de chaque élément en mousse soudé (54).

3. Procédé selon la revendication 1 ou 2, dans lequel (a) la surface profilée (73,75) et la ligne de soudure profilée (56) ont un profilage dans une direction, ou (b) la surface profilée (73,75) et la ligne de soudure profilée (56) ont un profilage dans deux directions inclinées, facultativement dans lequel la surface profilée (73,75) et la ligne de soudure profilée (56) définissent un réseau bidimensionnel de pics et de creux se prolongeant dans deux directions inclinées.

4. Procédé selon l'une quelconque des revendications précédentes, dans lequel la ligne de soudure (50) oscille, sur des côtés opposés, par rapport à une ligne centrale virtuelle, facultativement dans lequel la ligne de soudure oscillante (56) présente un pas entre pics adjacents de 2 à 10 mm et une amplitude entre pics adjacents de 1 à 10 mm.

5. Procédé selon l'une quelconque des revendications précédentes, dans lequel la ligne de soudure (56) est généralement alignée avec un sens d'épaisseur du corps et comprend des parties inclinées (60,62) qui sont inclinées dans le sens de l'épaisseur, facultativement dans lequel les parties inclinées (60,62) sont droites, courbes ou une combinaison de parties droites et courbes.

6. Procédé selon l'une quelconque des revendications précédentes, dans lequel à l'étape (b) la plaque chauffée (72) a une partie non soudante (110) située entre une paire de parties soudantes (102,104), et à l'étape (c) le soudage forme une paire de parties de lignes de soudure séparées par une partie de mousse non soudée (116), facultativement dans lequel (i) la partie non soudante (110) comprend un canal en renfoncement dans la plaque chauffée (100), et la partie en mousse non soudée (116) comprend une paire de parties en mousse surélevées comprimées ensemble, et/ou (ii) la partie non soudante (110) est allongée et située centralement dans la surface de la plaque soudante (100).

7. Procédé selon l'une quelconque des revendications précédentes, dans lequel à l'étape (b) une pluralité de faces de chaque élément en mousse (54) sont fondues et à l'étape (c) (i) les éléments en mousse sont soudés pour réaliser une deuxième ligne de soudure profilée (56) complémentaire qui est orthogonale à la ligne de soudure profilée (56), et/ou (ii) les éléments en mousse (54) sont soudés pour réaliser deux ensembles de lignes de soudure orthogonales (56) formant une grille continue de lignes de soudure, et/ou (iii) deux couches d'éléments en mousse (54) sont soudés pour réaliser deux couches empilées de mousse, les couches étant mutuellement reliées par des lignes de soudure profilées (56), de manière à ce que, dans le corps, les lignes de soudure (56) comprennent facultativement un groupement linéaire, une grille bidimensionnelle ou un réseau tridimensionnel.

8. Procédé selon l'une quelconque des revendications précédentes, le procédé consistant à assembler l'âme (50) entre des couches opposées de matériau pré-imprégné (40), soumettre l'ensemble à un vide et faire prendre l'ensemble à température élevée afin de faire prendre le matériau de résine dans le matériau pré-imprégné, dans lequel la ligne de soudure profilée (56) est comprimée en même temps que le matériau en mousse sous l'effet du vide.

9. Panneau sandwich comprenant une âme (50) qui comporte un corps en mousse thermoplastique structurelle, le corps comprenant une pluralité d'éléments en mousse sensiblement plans (54) soudés ensemble, chaque élément en mousse (54) ayant une face texturée soudée à une face texturée d'un élément en mousse sensiblement plan adjacent (54) par une ligne de soudure profilée (56) ayant des parties convexe et concave, et l'âme (50) étant mise en sandwich entre des couches opposées de matériau composite en résine renforcée de fibres, la ou les lignes de soudure profilée (56) se prolongeant dans un sens d'épaisseur de l'âme (50).

10. Panneau sandwich selon la revendication 9, dans lequel (a) la ligne de soudure profilée (56) présente un profilage dans une direction, ou (b) la ligne de soudure profilée (56) présente un profilage dans deux directions inclinées, facultativement dans lequel la ligne de soudure profilée (56) définit un réseau bidimensionnel de pics et de creux se prolongeant dans deux directions inclinées.

11. Panneau sandwich selon la revendication 9 ou 10, dans lequel la ligne de soudure (56) oscille, sur des côtés opposés, par rapport à une ligne centrale virtuelle, facultativement dans lequel la ligne de soudure oscillante (56) présente un pas entre pics adjacents de 2 à 10 mm et une amplitude entre pics adjacents de 1 à 10 mm.

12. Panneau sandwich selon l'une quelconque des revendications 9 à 11, dans lequel la ligne de soudure (56) est généralement alignée sur un sens d'épaisseur du corps et comprend des parties inclinées (60,62) qui sont inclinées dans le sens de l'épaisseur, facultativement dans lequel les parties inclinées (60,62) sont droites, courbes ou une combinaison de parties droites et courbes.

13. Panneau sandwich selon l'une quelconque des revendications 9 à 12, dans lequel la ligne de soudure (56) comprend une paire de parties de lignes de soudure séparées par une partie de mousse non soudée (110), facultativement dans lequel (i) la partie en mousse non soudée (116) comprend une paire de parties en mousse surélevées comprimées ensemble, et/ou (ii) la partie en mousse non soudée (116) est allongée et située centralement dans la ligne de soudure profilée.

14. Panneau sandwich selon l'une quelconque des revendications 9 à 13, dans lequel (i) les éléments en mousse (54) sont soudés pour réaliser une deuxième ligne de soudure profilée (56) complémentaire qui est orthogonale à la ligne de soudure profilée, et/ou (ii) les éléments en mousse (54) sont soudés pour
réaliser deux ensembles de lignes de soudure orthogonales (56) formant une grille continue de lignes de soudure, et/ou (iii) deux couches d'éléments en mousse (54) sont soudés pour réaliser deux couches empilées de mousse, les couches étant mutuellement reliées par des lignes de soudure profilées (56).

15. Panneau sandwich selon l'une quelconque des revendications 9 à 14, dans lequel les lignes de soudure (56) comprennent un groupement linéaire, une grille bidimensionnelle ou un réseau tridimensionnel.
